(19) Europäisches Patentamt
European Patent Office
Office européen des brevets

(11) EP 0 879 634 A2

## (12) EUROPEAN PATENT APPLICATION

(43) Date of publication:
25.11.1998 Bulletin 1998/48

(51) Int. Cl.$^6$: **B01D 61/58**, C02F 9/00,
B01D 61/02

(21) Application number: 98109173.9

(22) Date of filing: 20.05.1998

(84) Designated Contracting States:
AT BE CH CY DE DK ES FI FR GB GR IE IT LI LU
MC NL PT SE
Designated Extension States:
AL LT LV MK RO SI

(30) Priority: 22.05.1997 IT MI971206

(71) Applicant:
Hydro Air Research S.r.l.
20090 Opera (Milan) (IT)

(72) Inventor: Serafin, Giorgio
20066 Melzo, Prov. of Milan (IT)

(74) Representative:
Gervasi, Gemma, Dr.
Notarbartolo & Gervasi S.p.A.,
Corso di Porta Vittoria, 9
20122 Milano (IT)

(54) **Process of purification of leachate from dumps via ultrafiltration and reverse osmosis**

(57) Described herein is a multi-stage process for the purification of leachate from dumps, comprising:

a) one ultrafiltration stage;
b) one or more reverse osmosis stages, preferably two,
characterized in that at least one reverse osmosis stage, preferably the first, is carried out by produc-
ing a rise in pressure in the circuit of the liquid circulating under pressure in a single osmosis unit, and further characterized in that the ultrafiltration stage is carried out at a temperature of at least +30°C, preferably at a temperature of between +30°C and +50°C.

FIGURE 1

EP 0 879 634 A2

Printed by Xerox (UK) Business Services
2.16.6/3.4

**Description**

Scope of the invention

The present invention regards a multi-stage physical process for the treatment of leachate from dumps, such as landfill leachate, based on ultrafiltration and reverse osmosis.

Leachate from dumps is a highly polluting fluid discharge that forms in dumps of urban solid waste.

Reverse osmosis is a separation technique based upon the application, to the liquid to be purified, of a pressure capable of overcoming the osmotic pressure, thus forcing pure water to permeate through a semi-permeable membrane, with the production of a purified liquid phase (permeate) and a concentrated liquid residue where the organic and inorganic impurities contained in the leachate are found.

The aim of ultrafiltration is to pre-treat the sewage from dumps by removing suspended solids as well as the soluble colloidal and organic fractions having a high molecular weight, to render the sewage suitable for the subsequent reverse-osmosis treatments.

The present process makes it possible to reduce the environmental impact of leachate from dumps by concentrating the pollutants into a small volume, in order to render the subsequent disposal thereof outside the dump economically advantageous, whilst the majority of the starting leachate, freed from the pollutant species (permeate), can be disposed of in surface water-ways (rivers, etc.), in so far as it is suitable for discharge, in compliance with the most restrictive limits of acceptability set by Table A of the Italian Act 319/76 and by European standards.

State of the art

Typical processes for the purification of polluted waters include one ultrafiltration stage aimed at reducing biological particulate and colloidal pollutants, and two reverse-osmosis stages ("ACWA builds leachate treatment plant", Industrial News, Nov. 1993, p. 59).

Purification of dump sewage via reverse osmosis presents a number of problems. This type of sewage, in fact, contains considerable amounts of organic substances, which are often difficult to eliminate even via ultrafiltration pre-treatment cycles; it also contains substances in the colloidal state, which have a gelatinous consistency and tend to obstruct the pores of the filtering membranes, thus reducing their separation efficiency and making it necessary to wash them frequently, with consequent decrease in their average service life and increase in operating costs. In addition, it contains somewhat considerable amounts of ammonia, deriving from putrefaction processes of organic materials, which, with traditional processes, is still present in the final permeate in quantities often higher that those allowed by law, and the elimination of which requires further pre-treatments, which are often burdensome from the economic standpoint, such as the passage through special stripping towers ("ACWA builds leachate treatment plant", Industrial News, Nov. 1993, p. 59).

In addition, the total salinity of the leachate is so high that as the liquid to be purified is being concentrated in the osmosis unit and the aqueous phase is being continuously removed, the osmotic pressure reaches such high values as to adversely affect the yield and efficiency of the separation process.

According to the known technique, each reverse-osmosis stage is carried out at a constant operating pressure. According to U. Theilen (Process Combination, Trade Related Articles, in Chemical Plants and Processing, Nov. 1994, pp. 12-14), a number of reverse-osmosis stages at 30-50 bar may be followed by a number of stages conducted at a pressure of between 120 and 200 bar, in order to concentrate the liquid to a further extent. If an entire reverse-osmosis stage is carried out at a high pressure, however, energy consumption, and hence the economic cost, of the purification process increases considerably.

Consequently, the need is felt to have available new processes for the purification of leachate from dumps that are effective, economically advantageous, suitable for application on an industrial scale, and capable of overcoming the drawbacks of the known art.

Summary

The applicant has found a multi-stage process for the purification of leachate from dumps, particularly landfill leachate, comprising:

a) one ultrafiltration stage;
b) one or more reverse-osmosis stages (preferably 2),
characterized in that at least one reverse-osmosis stage, preferably the first, is carried out by producing at least one rise in pressure in the circuit of the liquid circulating under pressure in a single osmosis unit (i.e., in the said single osmosis stage). This increase is obtained by inserting in series, in the circuit of the liquid circulating in a given osmosis unit, at least one auxiliary pump PB (booster pump), which causes the pressure of the liquid circulating in a given osmosis unit to rise above atmospheric pressure (by virtue of the high-pressure pump), without interrupting the circuit at all.

The auxiliary pump thus makes it possible to work, at least at two different operating pressures in the same osmosis stage, namely, at a lower pressure in one phase and at a higher pressure in the next phase upon activation of the pump.

The present leachate purification process is moreover further characterized in that the ultrafiltration stage is preferably carried out at a temperature of at least +30°C, more preferably between approximately +30°C and +50°C.

The upper limit for the ultrafiltration temperature is dictated by the limit of economic advantage and, according to the case, may also be higher than the limit indicated above.

Further objects of the present invention are the following:

- a plant for treatment of leachate from dumps, comprising an ultrafiltration section and one or more osmosis sections, characterized in comprising at least one booster pump inserted in series in the circuit of a single osmosis unit, the said pump being in particular interposed between two consecutive groups of osmosis membranes forming part of the same osmosis unit, so as to produce an increase in the pressure of the fluid that circulates at high pressure (i.e., at a pressure higher than atmospheric pressure) in the said osmosis unit;
- a plant for treatment of leachate from dumps, comprising one ultrafiltration section and one or more osmosis sections, characterized in that it comprises a device for heating the leachate, located before the ultrafiltration membranes.

## Brief description of the figures

Figure 1 is a block diagram of a plant for purification of leachate from dumps according to the present invention (mc/h = $m^3/h$).

Figure 2 is a block diagram of a reverse-osmosis section according to the present invention, comprising 4 loops of membranes for osmosis.

Figure 3 illustrates the cross section of an element of ceramic membrane for ultrafiltration.

Figure 4 shows a membrane element for reverse osmosis with spiral configuration.

## Detailed description

The present process is described below in greater detail with reference to the figures.

In the present text, by "osmosis unit" is meant the apparatus comprising a set of membranes in which an osmosis stage is conducted, starting from immission of the liquid to be treated previously brought up to the chosen operating pressure by means of an appropriate pump, up to discharge of the permeate at atmospheric pressure.

In the first reverse-osmosis stage of the present process, the operating pressure is preferably between approximately 30 and 120 bar (for example, $\geq$ 30 bar and < 120), where by "operating pressure" is meant, in the present text, the pressure exerted on the fluid to be treated in order to overcome the osmotic pressure.

Typically, for the purposes of the present invention, each reverse-osmosis section (unit) contains a plurality of sets of osmosis membranes (loops) $L_1$ (typically, from 2 to 6), each one in turn containing one or more pressure vessels, for example from 2 to 6, set in series and/or in parallel inside each loop; each pressure vessel, in turn, contains two or more individual osmosis membranes (preferably spiral cartridges), for example, from 2 to 6, set in series inside the vessel. Each loop $L_1$-$L_4$ is supplied by a recirculation pump $PR_1$-$PR_4$, which causes the liquid that is to be filtered to re-circulate continuously inside the loop.

In order to increase the operating pressure in the chosen osmosis stage, preferably in the first, generally just one auxiliary pump PB is sufficient.

In practice, a booster pump PB takes the concentrate Cx coming out of a set of osmosis membranes and sends it at increased pressure onto the next set of membranes in the same osmosis unit, thus making it possible to work at two different operating pressures in the same osmosis stage, i.e., at a lower pressure in one set of membranes or loops, and at a higher pressure in the next set of loops of the same osmosis unit.

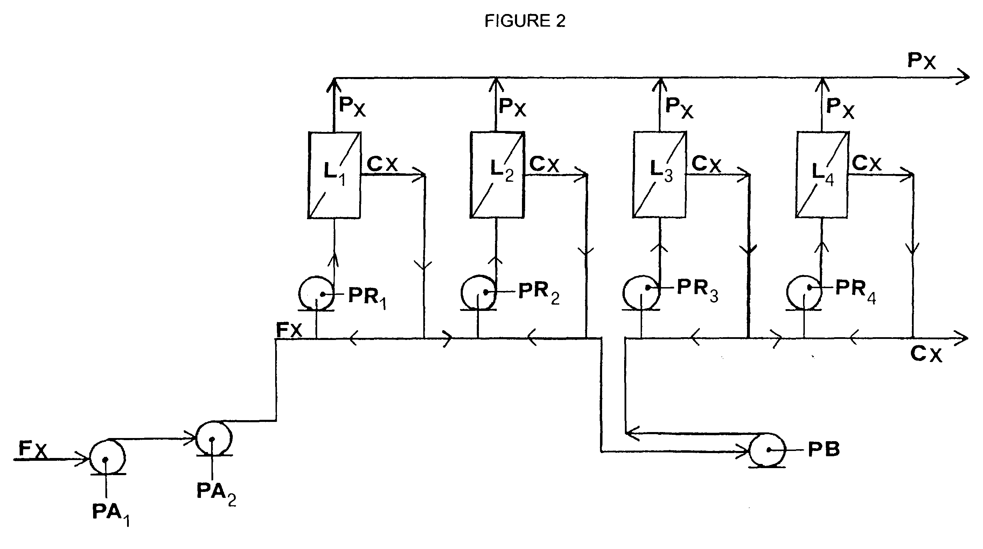

According to a particular embodiment of the present invention, the auxiliary pump is inserted in series between one first set and one second set of membranes (loops) of one and the same osmosis unit, each set consisting, for example, of two loops (Fig. 2).

Preferably, the operating pressure is between approximately 30 and approximately 50 bar upstream of the auxiliary pump (in particular in the first set of loops) and at pressures of between approximately 50 and 120 bar (for example, $\geq$ 50 bar and < 120 bar) downstream of the auxiliary pump (in particular in the second set of loops).

The use of the auxiliary pump according to the present invention makes it possible to overcome the increase in osmotic pressure and the consequent reduction in the difference between the pressure applied and the osmotic pressure, which is progressively found as osmosis proceeds on account of the continuous removal of permeate Px and the progressive concentration of the liquid to be purified, and which determines a slowing down of the flow and a decrease in the efficiency of osmosis. In addition, it becomes possible to work in an optimal way at a mean operating pressure lower than the one that it would be necessary to apply working at constant pressure to maintain an equal level of efficiency, the technique proving in particular extremely advantageous as compared to the processes of the known art recalled above, which use reverse-osmosis stages that are entirely conducted at constant operating pressures of between 120 and 200 bar. The use of lower operating pressures makes it possible to extend the service life of the osmosis membranes, reduces energy consumption, and hence operating costs.

Preferably, one or more of the separation phases on membranes of the present process, preferably all, both the ultrafiltration ones and the reverse-osmosis ones, are carried out using tangential filtration, i.e. pumping the liquid to be treated according to a flow that is parallel to the filtering surface.

Whilst the liquid flows parallel to the filtering surface, the filtrate is continuously removed.

This parallel flow generates a high turbulence which prevents the particles in suspension in the liquid from depositing on the pores of the surface of the filtering membrane, thus preventing the latter from getting clogged rapidly, and hence making it possible to maintain stable filtering efficiency over long periods. The speed of flow of the liquid, referred to as tangential velocity, is a very important operating parameter, which controls the efficiency of the tangential filtration (quantity of liquid removed as filtrate or permeate Px per unit time).

In particular, for the ultrafiltration process, the higher the tangential velocity, the greater the efficiency referred to above. In the present process, in ultrafiltration tangential velocities are used that are preferably between 3 and 6 metres per second.

When significant fouling of the membranes occurs, the restoring of the flow rates to optimal values may be obtained using various washing techniques, including backwashing.

Before undergoing the phases of ultrafiltration and pre-heating according to the present invention, the leachate arriving from the dump is typically subjected to one or more conventional pre-treatments, such as homogenization, biological nitrification-denitrification, and clarification by filtration on conventional sieves for separation of particulate and coarse material, in order to render it suitable for the subsequent treatments.

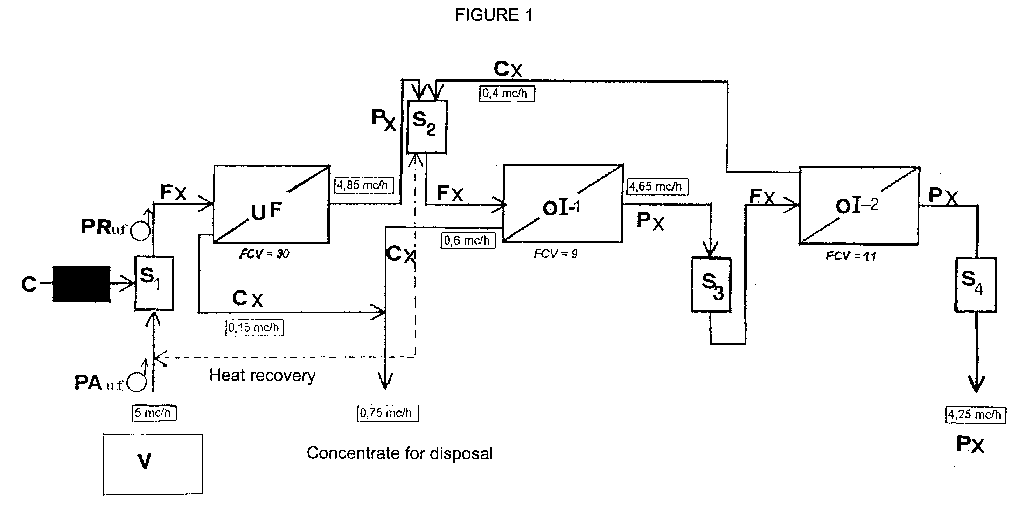

According to a particular embodiment of the present invention, the leachate that is to be subjected to ultrafiltration is stored in a storage tank V (Fig. 1) at a temperature of generally approximately +5°C and +20°C and, before being sent on to the ultrafiltration section, is preheated at the temperature selected for ultrafiltration according to the present process.

The leachate is, for example, pre-heated by being passed through a heat-exchanger, as illustrated in Fig. 1, located before the ultrafiltration section (for example, between the boiler C and the reservoir $S_1$, or else in the reservoir $S_1$), and hence in general stored in a reservoir $S_1$. The heating fluid of the heat-exchanger is produced by a boiler C supplied by an energy source of any kind (methane, discharge gas, etc.).

According to a typical embodiment of the present invention, the leachate stored in the storage tank is sent via the heat-exchanger to the ultrafiltration system UF by means of a feed pump $PA_{UF}$ at a flow rate, for example, of approximately 5 cubic metres per hour ($m^3$/h), and is then made to circulate continuously inside the membrane modules of the ultrafiltration unit UF by means of a high-capacity recirculation pump $PR_{UF}$

The linear velocity of circulation of the liquid in the ultrafiltration section UF is preferably approximately 3-6 metres per second.

The fact of carrying out ultrafiltration according to the present process at a temperature of at lest +30°C is advantageous above all for the ultrafiltration, which proceeds with greater efficiency, given equal filtering surface, than processes that operate at lower temperatures, for instance at approximately +5°C to +20°C. This enables the extent of concentration of the polluting substances to be increased and thus allows the frequency of washings of the ultrafiltration and reverse-osmosis membranes to be decreased, with a consequent reduction in operating costs.

In addition, the fact of carrying out ultrafiltration at a temperature of at least +30°C has proved advantageous also as regards the efficiency of the subsequent reverse-osmosis stages. In particular, it enables these stages to be carried out at a preferred temperature of at least +25°C (for example, approximately +25°C to +30°C), which, according to an advantageous embodiment of the present process, is obtained by cooling the permeate coming from ultrafiltration in a heat-exchanger which uses as cooling fluid the same starting leachate (i.e., the leachate stored at +5°C to +20°C in the storage tank).

In addition, it has been noted that at approximately +25°C to +30°C, reverse osmosis works with greater efficiency of permeation, given the same pressure, thus making it possible to use preferred operating pressures of approximately 30-120 bar, which are on average lower than those traditionally used, with consequent reduction in wear and frequency of replacements of mechanical structures and membranes of the plants, thus resulting in savings in terms of running costs.

The leachate that is to be ultrafiltered and the permeate Px that has been ultrafiltered have generally an alkaline pH, usually of between 7.5 and 8.8.

In the present process, the ultrafiltration membranes are preferably ceramic membranes, comprising a substrate made of $\alpha$-Al$_2$O$_3$ coated with an active layer of ZrO.

For the purposes of the present invention, ultrafiltration membranes with multi-channel tubular configuration are even more preferred.

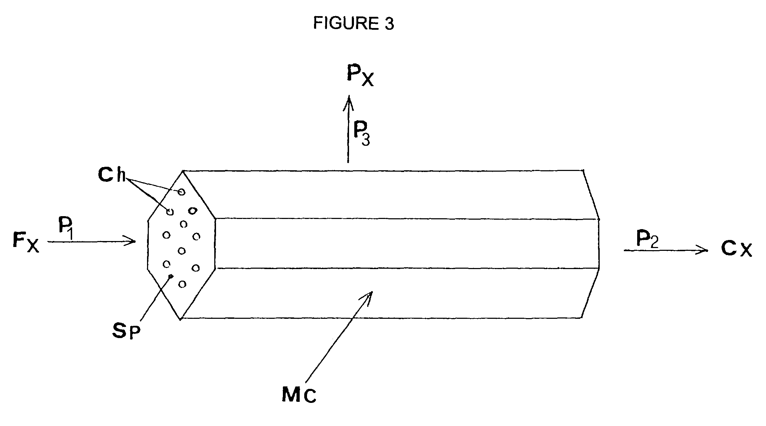

An example of an ultrafiltration membrane useful for the purposes of the present invention is the membrane Mc illustrated in Fig. 3, which comprises a substrate Sp of $\alpha$-Al$_2$O$_3$ having a hexagonal section, in which are made a number of channels Ch, the internal surface of which, which are to come in contact with the liquid to be treated, is coated with a layer of ZrO. Examples of ultrafiltration ceramic membranes that are useful for the present invention are marketed under the name MEMBRALOX by S.C.T. (Société Céramique Française, a company belonging to the company US Filter).

In Figure 3, the arrow P$_1$, parallel to the length of the channels Ch, indicates the direction of entry of the fluid Fx to be ultrafiltered; the arrow P$_2$, parallel to the direction P$_1$, indicates the direction of exit of the discarded fluid (concentrate Cx), and the arrow P$_3$, which is perpendicular to P$_1$, indicates the direction of exit of the ultrafiltered liquid (permeate Px): in each of these ultrafiltration membranes, the discarded liquid (concentrate) Cx collected in the exit direction P$_2$ is caused to recirculate a number of times at high speed along the filtering channels by means of the aforementioned recirculation pump.

In the present ultrafiltration unit UF are typically located a number of ultrafiltration membranes, grouped together in modules. Each module contains a number of membranes, and the various modules are in turn grouped together in series and/or in parallel in sets of membranes, called "loops", for example numbering from 2 to 5. Each loop is fed by a high-capacity recirculation pump.

According to an even more preferred characteristic of the present process, ultrafiltration membranes are used with porosity of approximately from 5 to 100 nm, more preferably of approximately 50 nm, associated to trans-membrane pressure preferably of from 0.5 to 3.5 bar, according to the specific porosity adopted, where the trans-membrane pressure is defined as follows:

$$P_T = \frac{P_1 + P_2}{2} - P_3$$

where P$_T$ is the trans-membrane pressure and, with reference to Fig. 3, P$_1$ is the pressure exerted by the fluid Fx entering each ultrafiltration module; P$_2$ is the pressure of the concentrate Cx (discarded phase) coming out of the ultrafiltration module; and P$_3$ is the pressure of the permeate Px coming out of the ultrafiltration module.

At the start of ultrafiltration, the trans-membrane pressure values are rather low, for example of approximately 0.5-0.8 bar; as ultrafiltration proceeds and the system of filters tends to become saturated owing to the presence of particulate and colloidal material, the pressure tends to rise, up to approximately 3.5 bar.

The use of ceramic membranes having porosity of 5-100 nm at trans-membrane pressures of 0.5-3.5 bar makes it possible to obtain specific filtration flow rates that are higher than those obtainable with known processes, which use membranes with porosity of over 100 nm, in particular of approximately 0.2 $\mu$m (i.e., approximately 200 nm), associated to trans-membrane pressures of 0.5-1.5 bar.

In the present process, the trans-membrane pressure values are conveniently controlled within the preferred values referred to above, by regulating the opening and closing of the outlet valve of the permeate Px and the outlet valve of the concentrate Cx (not illustrated in the figures), to obtain a flow rate that is as constant as possible, and also convenient for feeding the subsequent stages. The flow rates of the concentrate Cx and the permeate Px coming out of the ultrafiltration stage according to the present process are, for example, controlled at values of around 0.15 m$^3$/h and 4.85 m$^3$/h, respectively.

Ultrafiltration performed at a temperature of at least +30°C (in particular preceded by pre-heating) according to the present process affords significant advantages, which reflect also on the subsequent reverse-osmosis stages. In particular:

- It makes it possible to prevent fouling of the ultrafiltration membranes for a longer period than with previously known processes, thus cutting down the number of chemical washings and thus increasing average service life, which in the present case can be of even several years, as extrapolated from the experimental data on wear so far obtained.
- It makes it possible to increase the volumetric concentration of the discarded waste liquid up to levels that would otherwise be impossible, except at the cost of a high degree of fouling of the membranes, with consequent difficulty of regeneration.
- The use of ultrafiltration membranes with reduced porosity, as compared to known techniques which are associated to trans-membrane pressures that are on average higher, makes it possible to obtain higher filtration flow rates.

- For reverse osmosis, spiral membranes can be used (as illustrated later), which are more advantageous both from the point of view of energy consumption (low power installed) and from that of running costs (cost for replacing membranes, easy and fast replacement, reduced dimensions).
- The reverse-osmosis membranes can be washed easily and quickly, with very long time intervals between one cycle and another.
- The average service life of the osmosis membranes is longer.

The permeate Px coming out of the ultrafiltration stage is typically characterized by the following: a fouling index SDI < 5 (SDI standing for "silt density index"), and a turbidity index NTU < 1 (NTU standing for "nephelometric turbidity unit").

The concentrate Cx coming out of the ultrafiltration phase is disposed of, whilst the permeate Px passes on to the subsequent reverse-osmosis stages.

The reverse-osmosis stages of the present process are preferably carried out at a temperature of at least approximately +25°C, more preferably at approximately +25°C to +30°C.

In the present invention, the permeate Px coming out of the ultrafiltration unit UF is preferably sent on to a reservoir $S_2$, through a heat-exchanger fed with the starting leachate having a temperature of +5°C to +20°C, which will bring the permeate down to a temperature of between +25°C and +30°C, and from the reservoir $S_2$, from which it is then sent on to the first osmosis section 0I-1.

The heat released through the heat-exchanger is conveniently recovered to supply the aforesaid pre-heating phase.

According to a characteristics even more preferred of the present process, before undergoing reverse osmosis, the ultrafiltered permeate Px, which, as mentioned above, has an alkaline pH, is acidified to a pH preferably of between 5.0 and 6.5, and more preferably of between 5.5 and 6.0.

Acidification is typically obtained by adding an inorganic acid, such as HCl or sulphuric acid.

Generally, the acidification device is located inside the first osmosis unit, before the pump that feeds the osmosis membranes.

The acidification according to the present process makes it possible to keep the quantity of $NH_3$ of the final permeate Px effectively within levels allowed by law.

Apart from the above-mentioned acidification treatment, before undergoing osmosis, the ultrafiltered permeate Px is moreover typically subjected to one or more conventional pre-treatments, for example with anti-scaling agents and/or sterilizing chemical agents.

The osmosis membranes preferably used in the present process, in particular in the first stage of osmosis, are high saline-rejection ones, in particular corresponding to at least 95%, and more in particular with high rejection of NaCl (for example, NaCl rejection of approximately 98.8% to 99%).

Saline rejection expresses the percentage of a salt, in this case NaCl, which is retained in the concentrate by an osmosis membrane in the following operating conditions: aqueous solution containing 32,000 mg/lit of NaCl; operating pressure of 800 psig (5,516 kPa), at 25°C, pH 6.5; 15% recovery percentage after 24 hours. The flow rate in the individual osmosis elements may vary by around ±15%.

Unlike the membranes commonly used and sold for desalination of sea water, which may be used up to a maximum pressure of 70-80 bar, the high saline-rejection ones can reach operating pressures of up to 120 bar, thus avoiding compacting phenomena which are common to standard membranes, and in addition allowing high rejection rates (from the permeate) both of organic compounds and of ammonia.

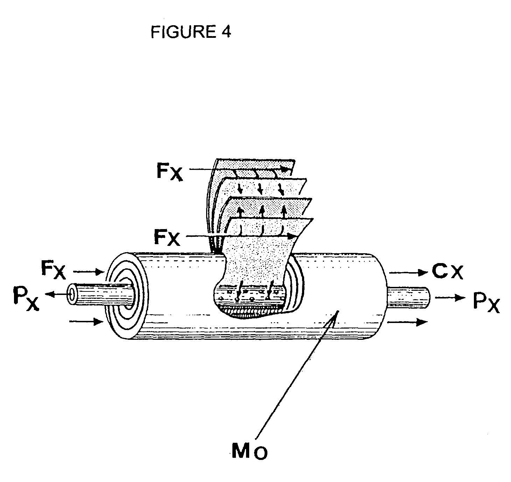

For the purposes of the present invention, reverse-osmosis membranes are even more preferred which have a spiral configuration, such as the membrane Mo illustrated in Fig. 4, for example those sold by DESAL Membrane Products, having, for example, diameters of 4 or 8 inches, and a length of, for example, approximately 40 inches, or else the membranes sold by FILMTEC.

In the present process, the supply of permeate Px to the osmosis units (both the first and the second) is obtained typically using a feed pump $PA_1$ and a high-pressure pump $PA_2$ (Fig. 2).

The permeate Px coming out of each loop of the first osmosis unit 0I-1, as it comes out, is collected together with that of the subsequent loops and is sent on to the subsequent stage, in particular to the second osmosis section 0I-2 (Fig. 2).

To provide an example, as illustrated in Fig. 2, the first osmosis section may contain 4 loops $L_1$-$L_4$ connected together in series, each supplied by its own recirculation pump $PR_1$-$PR_4$. Each loop in turn contains 3 pressure vessels, set either in series and/or in parallel inside the loop, each of which contains 3 cartridges of spiral membranes (not illustrated in Fig. 2).

Preferably, the fraction of permeate Px coming out of the last loop $L_4$ of the first osmosis section 0I-1 is recycled back to the first loop $L_1$ and reprocessed, thus obtaining a further improvement in the quality of the permeate Px.

Typically, in the present process the concentrate Cx coming out of the first osmosis section 0I-1 is discarded and sent for disposal, together with that produced during ultrafiltration. The permeate Px obtained from the first reverse-osmosis stage 0I-1 is typically sent on to a reservoir $S_3$, from where it is then sent on to the second osmosis section 0I-2 (Fig. 1).

The flow rates of concentrate Cx and permeate Px coming out of the first osmosis unit are, for example, adjusted to around 0.6 $m^3$/h and 4.65 $m^3$/h, respectively.

The second osmosis stage of the present process may be carried out using various types of known membranes, at operating pressures of preferably between approximately 40 and 70 bar, more preferably by applying a constant operating pressure.

In fact, in the second reverse-osmosis stage it is not generally necessary to apply a pressure increase, in so far as the permeate Px produced in the first stage has a rather high level of purification and the second stage has the function of completing this purification.

Just to provide an example, the second osmosis unit 0I-2 may be made up of 3 loops, each containing 2 pressure vessels, each of which in turn contains 3 spiral membrane cartridges.

In the present process, the concentrate Cx coming out of the second reverse-osmosis stage is typically recycled back to the first stage 0I-1 (Fig. 1), and the permeate Px coming out of the second reverse-osmosis stage 0I-2 is sent on to a reservoir $S_4$, from which it is then sent for discharge.

The present process, applied, for example, to a leachate with an initial conductivity of, for instance, 15,000-20,000 $\mu$S/cm (micro Siemens per cm), makes it possible to obtain recovery volumes of the final permeate Px on average of 85% with respect to the initial volume of leachate from dumps treated, and volumes of concentrate Cx for disposal of typically 15% with respect to the leachate treated, with a final volumetric concentration factor VCF corresponding to roughly 6 times the original volume of treated liquid, as follows:

$$VCF = \frac{V_E}{V_C}$$

where $V_E$ is the volume of incoming liquid in a separation stage, and $V_C$ is the volume of concentrate $C_x$ coming out of the same stage.

The present process enables, for example, the following VCF values to be obtained, stage by stage:

ultrafiltration VCF = 30; first stage of reverse-osmosis VCF = 9; second stage of reverse-osmosis VCF = 11.

The present process is suitable, for instance, for the treatment of leachate from dumps containing $NH_4$ > 1200 ppm, with conductivity $\geq$ 10,000 $\mu$S/cm (micro Siemens per cm), enabling a permeate Px to be obtained at the end of the process having $NH_4$ values $\leq$ 10 ppm and with conductivity < 100 $\mu$S/cm.

The adjustment of the rate of immission of the fluid to be treated and of the rate of exit of the concentrate Cx and permeate Px in the various stages of the present process basically meets the need to have flow rates that are as constant as possible and functional for the needs of industrial production cycles, preferably to enable completion of a cycle of purification of leachate in a single working day.

The flow rates, expressed in cubic metres per hour, given above with reference to the various stages are thus given purely to provide an example, since they can be varied within wide margins according to the specific requirements.

The selection of operating conditions according to the present process enables a purification efficiency to be achieved that remains constant over time, even with variations in the characteristics of the incoming liquid that is to undergo ultrafiltration. The ultrafiltration and reverse-osmosis modules maintain high average rates of filtration over long periods of time, and their regenerateability is excellent.

The following example is given for the purpose of illustrating the invention, but without limiting the scope thereof.

## Example 1

In an industrial plant one presented schematically in Figs. 1 and 2, from 60 to 240 cubic metres per day of a leachate from dumps which had the characteristics given in Table 1 were treated to obtain a permeate Px having the characteristics also tabulated in Table 1.

Characteristics of plant

| Capacity of treatment of leachate | 100 $m^3$/day |
|---|---|

(continued)

| Installed power | 305 kW |
|---|---|
| Quality of final permeate | within the limits set down in Table A of the Italian Act 319/76 |
| Ceramic membranes for ultrafiltration | MEMBRALOX |
| Spiral osmosis membranes | DESAL 4-inch |

Initial storage section - Leachate storage tank

| Temperature | +5°C to +20°C |
|---|---|
| pH | 7.5 to 8.8 |
| Rate of supply of leachate to storage tank | 5 m$^3$/h |

Pre-heating section

| Heating at | +30°C to +50°C |
|---|---|

Ultrafiltration section

2 loops, each containing four MEMBRALOX modules (parallel with two elements in series)

| Temperature | +30°C to +50°C |
|---|---|
| pH | 7.5 to 8.8 |
| Trans-membrane pressure | 0.5 to 3.5 bar |
| Flow rate of outgoing Cx | 0.15 m$^3$/h |
| Flow rate of outgoing permeate | 4.85 m$^3$/h |
| VCF | 30 |

Passage through heat-exchanger

The temperature drops to +25°C / +30°C, with recovery of heat which is used to supply the pre-heating phase.

Section of storage in reservoir

Reverse-osmosis section, Stage 1

Four loops, each containing 3 pressure vessels, each of which in turn contains 3 DESAL 4" x 40" cartridges

| Temperature | +25°C to +30°C |
|---|---|
| pH | 5.5 to 6 |
| Pressure of loops 1 and 2 | 30 to 50 bar |

(continued)

| Pressure of loops 3 and 4 | 50 to 120 bar |
|---|---|
| VCF | 9 |
| Flow rate of outgoing concentrate | 0.6 m$^3$/h |
| Flow rate of outgoing permeate | 4.65 m$^3$/h |

Storage section between the 1st and 2nd osmosis units

The permeate from the first osmosis unit is stored in an intermediate reservoir before supplying the subsequent stage.

Reverse-osmosis section, Stage 2

Three loops, each containing 2 pressure vessels, each of which in turn contains 3 high saline-rejection membrane cartridges

| Temperature | +25°C to +30°C |
|---|---|
| pH | 5 to 6 |
| Pressure | 40 to 70 bar |
| VCF | 11 |
| Flow rate of outgoing concentrate | 0.40 m$^3$/h |
| Flow rate of outgoing permeate | 4.25 m$^3$/h |

The concentrate is recycled back to the first reverse-osmosis unit. The final permeate has a clear, colourless appearance; no smell can be perceived in the vicinity of the tank. The permeate is collected in a storage tank before being sent on for discharge.

TABLE 1

| Parameter | Minimum values - maximum values | |
|---|---|---|
| | Ingoing leachate | Final permeate |
| T (°C) | 5 - 30 | - |
| pH | 6.0 - 8.5 | 6.0 - 6.5 |
| Cond. ($\mu$S/cm) | 5,200 - 20,000 | < 100 |
| NH$_4$-N (ppm) | 295 - 1,200 | < 10 |
| TOC (ppm) | 600 - 2,000 | < 17 |
| BOD$_5$ (ppm) | 300 - 1,200 | < 20 |
| COD (ppm) | - 1,200 | < 15 |
| TDS (ppm) | 5,000 - 10,000 | - |
| HOX (ppm) | 1.5 -— | $\leq$ 0.04 |

where:

Cond.    = conductivity
NH$_4$-N    = ammoniacal nitrogen
TOC     = total organic carbon

COD    = chemical oxygen demand
$BOD_5$    = biochemical oxygen demand after 5 days at 20°C
TDS    = total dissolved solids
HOX    = halogenated organic compounds

## Claims

1. Multi-stage process for the purification of leachate from dumps, comprising

    a) one ultrafiltration stage;
    b) one or more reverse-osmosis stages,
    characterized in that at least one reverse-osmosis stage, is carried out by producing at least one rise in pressure in the circuit of the liquid circulating under pressure in a single osmosis unit, the said rise being obtained by inserting at least one booster pump PB in series in the said circuit.

2. Process according to claim 1, in which the ultrafiltration stage is carried out at a temperature of at least +30°C.

3. Process according to claim 2, in which the ultrafiltration stage is carried out at a temperature of between +30°C and +50°C.

4. Process according to claim 1 or claim 2, in which the first reverse-osmosis stage is carried out at an operating pressure of between 30 and 120 bar.

5. Process according to claim 1 or claim 2, in which the first reverse-osmosis stage is carried out at pressures of between 30 and 50 bar upstream of the booster pump PB, and at pressures of between 50 and 120 bar downstream of the booster pump PB.

6. Process according to claim 1 or claim 2, in which each reverse-osmosis section (unit) contains a number of sets of osmosis membranes (loops) $L_1$, each one in turn containing one or more pressure vessels set in series and/or in parallel inside each loop; each pressure vessel, in turn, contains two or more individual osmosis membranes set in series inside the vessel; each loop $L_1$-$L_4$ is supplied by a recirculation pump $PR_1$-$PR_4$, which causes the liquid that is to be filtered to recirculate continuously inside the loop.

7. Process according to claim 6, in which the booster pump PB is inserted in series between one first set and one second set of booster membrane loops $L_1$-$L_4$.

8. Process according to claim 1 or claim 2, in which one or more of said stages are carried out using tangential filtration, pumping the liquid to be treated according to a flow that is parallel to the filtering surface.

9. Process according to claim 8, in which the ultrafiltration stage is carried out at a tangential filtration velocity of between 3 and 6 metres/second.

10. Process according to claim 2, in which the leachate is stored in a storage tank V at a temperature of +5°C to +20°C and undergoes pre-heating by passing through a heat-exchanger, and is then stored in a reservoir $S_1$.

11. Process according to claim 1 or claim 2, in which the leachate stored in the storage tank V is sent on to the ultrafiltration system by means of a feed pump $PA_{UF}$ and is then made to re-circulate inside the membrane modules of the ultrafiltration unit UF by means of a high-capacity recirculation pump $PR_{UF}$

12. Process according to claim 1 or claim 2, in which the ultrafiltration membranes are ceramic membranes, comprising a substrate made of $\alpha$-$Al_2O_3$ coated with an active layer of ZrO.

13. Process according to claim 12, in which the said membranes have a multi-channel tubular configuration.

14. Process according to claim 1 or claim 2, in which in the ultrafiltration unit are located a number of ultrafiltration membranes, grouped together in modules; each module contains a number of membranes, and the various modules are in turn grouped together in series and/or in parallel in sets of membranes, called "loops", each loop being fed by a high-capacity recirculation pump.

15. Process according to claim 1 or claim 2, in which ultrafiltration membranes are used with porosity of from 5 to 100 nm, associated to trans-membrane pressures $P_T$ of from 0.5 to 3.5 bar, where the trans-membrane pressure is defined as follows:

$$P_T = \frac{P_1 + P_2}{2} - P_3$$

where $P_T$ is the trans-membrane pressure and $P_1$ is the pressure exerted by the liquid Fx entering the ultrafiltration section; $P_2$ is the pressure of the concentrate Cx (discarded phase) coming out of the ultrafiltration section; and $P_3$ is the pressure of the permeate Px coming out of the ultrafiltration section.

16. Process according to claim 15, in which the said porosity is 50 nm.

17. Process according to claim 1 or claim 2, in which the reverse-osmosis stages are two and are carried out at a temperature of at least +25°C.

18. Process according to claim 17, in which in which the reverse-osmosis stages are carried out at a temperature of between +25°C and +30°C.

19. Process according to claim 18, in which the permeate Px coming out of the ultrafiltration unit UF is sent on to a reservoir $S_2$, through a heat-exchanger fed with the starting leachate having a temperature of +5°C to +20°C, which brings the permeate down to a temperature of between +25°C and +30°C, and from the said reservoir it is then sent on to the first osmosis section 0I-1, the heat released through the heat-exchanger being recovered to supply the aforesaid pre-heating phase.

20. Process according to claim 1 or claim 2, in which the ultrafiltered permeate Px, before undergoing reverse osmosis, is acidified to a pH of between 5.0 and 6.5.

21. Process according to claim 20, in which the said pH is of between 5.5. and 6.0.

22. Process according to claim 1 or claim 2, in which reverse-osmosis membranes are used with high rejection of NaCl, corresponding to at least 95%, where the rejection expresses the percentage of NaCl retained in the concentrate by a membrane in the following operating conditions: aqueous solution containing 32,000 mg/lit of NaCl; operating pressure of 800 psig (5,516 kPa), at 25°C, pH 6.5; recovery percentage, 15% after 24 hours.

23. Process according to claim 1 or claim 2, in which the first osmosis section 0I-1 contains 4 loops $L_1$-$L_4$ connected together in series, each supplied by its own recirculation pump $PR_1$-$PR_4$; each loop in turn contains 3 pressure vessels, set either in series and/or in parallel inside the loop, each of which contains 3 cartridges of spiral membranes.

24. Process according to claim 1 or claim 2, in which the fraction of permeate Px coming out of the last loop $L_4$ of the first osmosis section 0I-1 is recycled back to the first loop $L_1$ and re-processed.

25. Process according to claim 1 or claim 2, in which the second osmosis stage is carried out applying a constant operating pressure, of between 40 and 70 bar.

26. Process according to claim 1 or claim 2, in which the concentrate Cx coming out of the first osmosis section 0I-1 is discarded and sent for disposal, together with that produced during ultrafiltration; the permeate Px obtained from the first reverse-osmosis stage 0I-1 is sent on to a reservoir $S_3$, from where it is then sent on to the second osmosis section 0I-2; the concentrate Cx coming out of the second reverse-osmosis stage 0I-2 is recycled back to the first stage 0I-1, and the permeate Px coming out of the second reverse-osmosis stage 0I-2 is sent on to a reservoir $S_4$, from which it is then sent for discharge.

27. Process according to claim 1 or claim 2, in which the second osmosis unit 0I-2 is made up of 3 sets of membranes or loops, each containing 2 pressure vessels, each of which in turn contains 3 spiral membrane cartridges.

28. Process according to claim 1, in which the leachate from dumps to be treated contains $NH_4 > 1200$ ppm and has a conductivity $\geq 10,000$ $\mu$S/cm, and the permeate obtained at the end of the process has $NH_4$ values $\leq 10$ ppm and

conductivity < 100 $\mu$S/cm.

29. Plant for the treatment of leachate from dumps, comprising one ultrafiltration section and one or more osmosis sections, characterized in that it comprises at least one booster pump inserted in series in the circuit of a single osmosis unit, the pump being interposed between two consecutive sets of osmosis membranes of the same osmosis unit, so as to cause a rise in the pressure of the fluid circulating at high pressure in the said osmosis unit.

30. Plant according to claim 29, in which the said booster pump is inserted in series between one first set and one second set of osmosis membrane loops, each consisting of two sets of membranes (or loops), in which the first set operates at pressures of between 30 and 50 bar, and the second set at pressures of between 50 and 120 bar.

31. Plant for the treatment of leachate from dumps, comprising one ultrafiltration section and one or more osmosis sections, characterized in that it comprises a device for heating the leachate, located before the ultrafiltration membranes.

32. Use of an booster pump PB to obtain a rise in the pressure in the circuit of a fluid circulating at high pressure inside a single reverse-osmosis unit, belonging to a plant for the purification of leachate from dumps comprising one ultrafiltration unit and at least one reverse-osmosis unit.

FIGURE 1

Concentrate for disposal

FIGURE 2

EP 0 879 634 A2

FIGURE 3

FIGURE 4